# EUROPEAN PATENT SPECIFICATION

(11) **EP 0 397 423 B1**
(45) Date of publication and mention of the grant of the patent: **17.08.1994**
(21) Application number: 90304894.0
(22) Date of filing: 04.05.1990
(51) Int. Cl.: A47J 37/12, A23P 1/00, A23P 1/08

(54) **Method and apparatus for making a food product**
Verfahren und Vorrichtung zum Herstellen eines Nahrungsproduktes
Procédé et appareil de fabrication d'un produit alimentaire

(30) Priority: 05.05.1989 GB 8910354
(43) Date of publication of application: 14.11.1990
(73) Proprietor: Tibbs, Patricia Maureen, Exeter EX6 8RJ (GB)
(72) Inventor: Tibbs, Patricia Maureen, Exeter EX6 8RJ (GB)
(74) Representative: Craske, Stephen Allan

(56) References cited:
- DE-A- 3 525 283
- DE-U- 1 993 646
- GB-A- 1 508 781
- US-A- 3 466 999
- US-A- 3 585 050
- US-A- 3 650 766
- US-A- 4 141 578

## Description

### TECHNICAL FIELD OF THE INVENTION

This invention relates to a method of commercially producing an unusual and appealing food product, and apparatus for use in the method.

### BACKGROUND ART

It is well known in the culinary art to make a product called a fritter by coating a piece of fruit with a batter mixture and then frying it in a shallow pan. The fritter is usually turned over half way through cooking to ensure that both sides are cooked. The batter mixture can vary in composition but normally includes 100 to 125 gms plain wheat flour, a pinch of salt, egg, and about 150 ml milk or milk and water. Sometimes sugar may be added as a sweetener, and occasionally oil may be added in a ratio of between 1:6 to 1:8 by weight of the flour.

The fritters produced by the conventional method are non-symmetrical and are often of wrinkled appearance. Moreover, the batter coat is often unevenly cooked.

US-A-3 466 999 discloses a method of making a food product, said method comprising:
inserting a handle part-way into a piece of fruit,
forming a liquid batter mixture,
inserting the fruit into said liquid batter mixture so as to completely cover the fruit with said liquid batter mixture and thereby form a batter coat over said fruit,
immersing the batter-coated fruit in heated oil,
leaving the batter-coated fruit immersed in the heated oil for sufficient time for said batter coat to cook, and
removing the batter-coated fruit from the oil in a generally vertical direction.

DE-A-3 525 283 discloses apparatus for use in making a food product, comprising an open topped tank for containing cooking oil, means for heating the oil contained in the tank, and a frame which is adapted to be mounted in or over the open top of the tank and which extends continuously around the periphery of the tank, the frame including a plurality of securing devices by which food products can be suspended in the oil to cook, the securing devices being mounted on the frame around the periphery of the tank.

An aim of the invention is to provide a commercial food product of the fritter type which, in addition to being pleasant to eat, has an aesthetically attractive shape and colour and which is reproducible on a commercial scale with a minimal reject rate.

### SUMMARY OF THE INVENTION

The method of the present invention is characterised in that the liquid batter mixture comprises soya flour, non-soya flour, egg, sugar, and oil,
said heated oil is heated to a temperature of between 170°C and 195°C, and
the batter-coated fruit is inserted generally vertically into a central area of the heated oil whilst manually holding the handle, the handle and batter-coated fruit are moved laterally whilst immersed in the heated oil to engage a clip mounted on a frame suspended about a periphery of the heated oil and away from the central area so as to suspend the fruit from the frame at the periphery of the heated oil while the batter-coated fruit is immersed in the heated oil, whereby a smooth, even, golden brown outermost batter coat is formed on said fruit.

By suspending the product in the cooking oil using the frame it is possible in almost every instance to achieve a cooked product with an even and symmetrical batter coat.

The piece of fruit may be a whole fruit or part of a fruit. A particularly preferred fruit is the banana. Examples of particularly suitable bananas are musa acminata, musa basjoo, musa nana, and musa x poradisiaca. Other fruits which may be used are the apple, strawberry, peach, pear, pineapple and kiwi fruit.

The invention includes apparatus for use in the method which is characterised in that the ssecuring devices are directed inwardly towards the central area of the frame and each comprises a pair of laterally projecting spring fingers which define a laterally directed opening for receiving the food product.

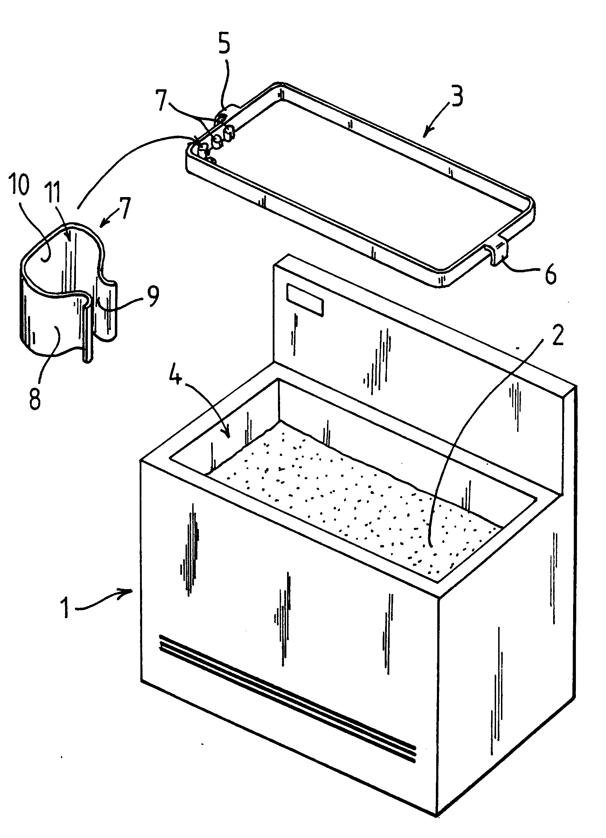

### BRIEF DESCRIPTION OF THE DRAWING

The accompanying drawing is a perspective view of fryer apparatus for use in manufacturing food products of the invention.

### DETAILED DESCRIPTION OF THE DRAWINGS

The fryer is of the kind often referred to as a deep fat fryer and comprises an open-topped tank 1 for containing cooking oil 2. In order to heat the oil to operating temperature an electrical heating element (not shown) is incorporated into the walls of the tank in known manner. Other forms of heating such as gas burners disposed beneath the tank may also be used.

A specially constructed frame 3 of generally rectangular shape is provided to be received in a horizontal plane within the open top 4 of the tank such that there is a small gap between the sides of the frame and the sides of the tank. The frame may be formed of rust-proof metal such as aluminium or stainless steel. In order to suspend the frame above the surface of the oil when the tank is filled, the frame is provided with two or more downwardly directed hooks 5, 6 which locate over the top edge of the tank walls. The inner face of the frame 3 is provided with a series of inwardly directed spring clips 7 which are mutually spaced at intervals around the perimeter of the frame. (Only a few of the clips are shown in the drawings.) These clips are for use in suspending the food products in the cooking oil, as will be explained below. Each clip comprises a pair of spring fingers 8, 9 (see inset detail) which project inwardly of the frame and are joined by an integral base portion 10. The fingers 8, 9 are spaced apart to define between them a substantially vertical, laterally open gripping aperture 11.

The reason that the spring clips are arranged around the edge of the tank as opposed to its centre is so that the cooked food products can be removed from the frame without risk of the hot oil dripping from them onto adjacent products, which would in turn make them difficult to remove by hand.

The way in which the apparatus is used in manufacturing the food products of the invention will now be explained in the following illustrative Example.

### EXAMPLE 1

A dry mix was made from the following main ingredients:

| Ingredient | Weight (gms) | Percentage of dry mix by wt. |
|---|---|---|
| Plain wheat flour | 5,000 | 48.5 |
| Soya flour | 1,500 | 14.6 |
| Sugar | 2,200 | 21.3 |
| Vegetable oil | 875 | 8.5 |
| Milk powder | 250 | 2.4 |
| Dried egg | 210 | 2.0 |
| Baking powder | 160 | 1.6 |
| Salt | 112 | 1.1 |

Small quantities of emulsifiers E471 and E322 and stabiliser E412 were also included in permitted levels.

The tank was partially filled with a quantity of vegetable cooking oil to just below the frame 3. The heater was then turned on to heat the oil to a temperature of between 170 and 195 degrees C, 180 degrees C being the temperature to aim for.

1,000 gm of the dry mix was mixed with sufficient water (approximately 850ml) to give a batter with a creamy consistency.

A banana was cut transversely into approximately two halves, and each half then had a wooden stick longitudinally inserted part way into one end. Using the stick as a handle, the portion of banana was dipped into the batter to coat it all over and was then immediately inserted into the fryer. The wooden stick was held vertically in one of the spring clips 7 with the coated banana immersed in the oil without touching the sides of the tank. After three and a half minutes the cooked product was removed from the tank and allowed to cool slightly before being eaten.

The batter coating was of a smooth even appearance and of a rich golden brown colour. The product was substantially symmetrical about the axis of the stick and was of pleasant flavour. The batter was of a non-greasy consistency.

In order to demonstrate the importance of various aspects of the process a number of comparative examples were performed.

### COMPARATIVE EXAMPLE 1

Example 1 was repeated, but instead of using the frame 3 the products were allowed to sink to the bottom of the tank and were removed from the tank after cooking for three and a half minutes.

The batter coating of the resulting products was misshapen and unsymmetrical with a notable flat on one side. The coating was unevenly cooked and contained several cracks. Altogether, the product was considered to be completely unsuitable for sale.

### COMPARATIVE EXAMPLE 2

Example 1 was was repeated using an additional 1,500 gms of plain wheat flour in lieu of the soya flour.

The batter coating of the resulting products was of a much heavier texture and was of a less appetising colour.

### COMPARATIVE EXAMPLE 3

Example 1 was repeated omitting the sugar from the batter mix.

The batter coating of the resulting products was inferior colour and not sweet.

### COMPARATIVE EXAMPLE 4

Example 1 was repeated omitting the vegetable oil from the batter mix.

The batter coating was of a poor colour and was rather tough and dry to eat.

### COMPARATIVE EXAMPLE 5

Example 1 was repeated omitting the baking powder from the batter mix.

The batter coating of the resulting products was heavier and did not rise when cooked.

### COMPARATIVE EXAMPLE 6

Example 1 was repeated omitting the emulsifiers from the batter mix.

The batter coating of the resulting products was of the same colour and flavour but was of a drier texture.

### COMPARATIVE EXAMPLE 7

Example 1 was repeated omitting the stabiliser from the batter mix.

The flavour and colour of the batter coating was unchanged but was dry to eat. The quality of the coating was inconsistent and had poor keeping qualities.

In Comparative Examples 2 to 7 the resulting products were considered to be of saleable quality, though inferior to the products obtained by Example 1.

### EXAMPLE 2

Example 1 was repeated using an apple in place of the length of banana.

The food product thus obtained was of pleasant taste, and the batter coating was of similar appearance and consistency to that obtained in Example 1.

### EXAMPLES 3 TO 7

Example 1 was repeated using the following fruits:
Strawberry
Peach
Pear
Pineapple
Kiwi fruit
In each case a pleasant tasting product was obtained with an acceptable batter coat.

It will be appreciated that although a specific preferred recipe for the batter coat has been given in Example 1 acceptable results could still be obtained if the weights and percentages were to be varied from those given. Similarly, equivalent ingredients could be substituted for many of those stated, e.g. saccharin could be substituted for sugar, fresh milk for milk powder, and so on.

## Claims

1. A method of making a food product, said method comprising:
inserting a handle part-way into a piece of fruit,
forming a liquid batter mixture,
inserting the fruit into said liquid batter mixture so as to completely cover the fruit with said liquid batter mixture and thereby form a batter coat over said fruit,
immersing the batter-coated fruit in heated oil,
leaving the batter-coated fruit immersed in the heated oil for sufficient time for said batter coat to cook, and
removing the batter-coated fruit from the oil in a generally vertical direction,
characterised in that
the liquid batter mixture comprises soya flour, non-soya flour, egg, sugar, and oil,
said heated oil is heated to a temperature of between 170°C and 195°C, and
the batter-coated fruit is inserted generally vertically into a central area of the heated oil whilst manually holding the handle, the handle and batter-coated fruit are moved laterally whilst immersed in the heated oil to engage a clip mounted on a frame suspended about a periphery of the heated oil and away from the central area so as to suspend the fruit from the frame at the periphery of the heated oil while the batter-coated fruit is immersed in the heated oil, whereby a smooth, even, golden brown outermost batter coat is formed on said fruit.

2. A method according to Claim 1, in which the batter mixture comprises baking powder.

3. A method according to Claim 1 or 2, in which the batter mixture comprises an emulsifier.

4. A method according to any of Claims 1 to 3, in which the batter mixture comprises a stabiliser.

5. A method according to any of Claims 1 to 4, in which the batter mixture comprises plain wheat flour.

6. A method according to any preceding Claim, in which the batter mixture is made by adding liquid to a dry batter mix.

7. A method according to Claim 6, in which the dry batter mix comprises milk powder.

8. A method according to Claim 6 or 7, in which the dry batter mix comprises dried egg.

9. A method according to any preceding claim, in which the fruit is a banana, apple, strawberry, peach, pear, pineapple or kiwi fruit.

10. Apparatus for use in making a food product, comprising an open topped tank (4) for containing cooking oil, means for heating the oil contained in the tank, and a frame (3) which is adapted to be mounted in or over the open top of the tank (4) and which extends continuously around the periphery of the tank, the frame (3) including a plurality of securing devices by which food products can be suspended in the oil to cook, the securing devices (7) being mounted on the frame (3) around the periphery of the tank,
characterised in that the securing devices (7) are directed inwardly towards the central area of the frame and each comprises a pair of laterally projecting spring fingers (8, 9) which define a laterally directed opening for receiving the food product.

## Patentansprüche

1. Verfahren zur Herstellung eines Nahrungsprodukts, bei dem
ein Haltegriff teilweise in ein Stück Frucht gesteckt wird,
eine flüssige Teigmischung gebildet wird,
die Frucht in die flüssige Teigmischung getan wird, um die Frucht vollständig mit der flüssigen Teigmischung zu bedecken und dadurch eine Teigumhüllung um die Frucht herum zu bilden,
die mit Teig überzogene Frucht in erhitztes Öl getaucht wird,
die mit Teig überzogene Frucht für eine ausreichende Zeit in dem erhitzten Öl gelassen wird, um die Frucht zu garen, und
die mit Teig überzogene Frucht in im wesentlichen vertikaler Richtung aus dem Öl entfernt wird,
dadurch gekennzeichnet, daß
die flüssige Teigmischung Sojamehl, Mehl, das nicht aus Soja ist, Ei, Zucker und Öl umfaßt,
das erhitzte Öl auf eine Temperatur zwischen 170°C und 195°C erhitzt wird, und
die mit Teig überzogene Frucht im wesentlichen vertikal in einen Mittelbereich des erhitzten Öls getan wird, wobei der Haltegriff manuell gehalten wird, der Haltegriff und die mit Teig überzogene Frucht in Querrichtung bewegt werden, während sie in das erhitzte Öl eingetaucht sind, um in eine Klemmvorrichtung zu greifen, die auf einem Rahmen montiert ist, welcher im Randbereich des erhitzten Öls und von dem Mittelbereich entfernt hängt, um so die Frucht am Rahmen im Randbereich des erhitzten Öls aufzuhängen, während die mit Teig überzogene Frucht in das erhitzte Öl eingetaucht ist, wodurch ein glatter, gleichmäßiger, goldbrauner äußerer Teigmantel auf dieser Frucht gebildet wird.

2. Verfahren nach Anspruch 1, bei dem die Teigmischung Backpulver umfaßt.

3. Verfahren nach Anspruch 1 oder 2, bei dem die Teigmischung einen Emulgator umfaßt.

4. Verfahren nach einem der Ansprüche 1 bis 3, bei dem die Teigmischung einen Stabilisator umfaßt.

5. Verfahren nach einem der Ansprüche 1 bis 4, bei dem die Teigmischung reines Weizenmehl umfaßt.

6. Verfahren nach einem der vorhergehenden Ansprüche, bei dem die Teigmischung durch Zugabe von Flüssigkeit zu einer Trockenteigmischung hergestellt wird.

7. Verfahren nach Anspruch 6, bei dem die Trockenteigmischung Milchpulver umfaßt.

8. Verfahren nach Anspruch 6 oder 7, bei dem die Trockenteigmischung Trockenei umfaßt.

9. Verfahren nach einem der vorhergehenden Ansprüche, bei dem die Frucht Banane, Apfel, Erdbeere, Pfirsich, Birne, Ananas oder Kiwifrucht ist.

10. Gerät zur Verwendung bei der Herstellung eines Nahrungsprodukts, das einen offenen Behälter (4), der zum Garen verwendetes Öl enthält, Mittel zum Erhitzen des in dem Behälter enthaltenen Öls und einem Rahmen (3) umfaßt, der zur Montage in oder über der Öffnung des Behälters (4) vorgesehen ist und sich kontinuierlich um den Randbereich des Behälters erstreckt, wobei der Rahmen (3) mehrere Befestigungseinrichtungen einschließt, mittels derer Nahrungsprodukte zum Garen in dem Öl aufgehängt werden können, wobei die Befestigungseinrichtungen (7) auf dem Rahmen um den Randbereich des Behälters montiert sind,
dadurch gekennzeichnet, daß die Befestigungseinrichtungen (7) nach innen zu dem Mittelbereich des Rahmens gerichtet sind und jeweils ein Paar in Querrichtung herausragender Federarme (8,9) umfassen, die eine in Querrichtung gerichtete Öffnung zur Aufnahme des Nahrungsproduktes bilden.

## Revendications

1. Procédé de préparation d'un produit alimentaire, ledit procédé consistant :
à introduire partiellement une tige de soutien dans un fruit,
à former un mélange de pâte liquide,
à introduire le fruit dans ledit mélange de pâte liquide de manière à enrober complètement le fruit par ledit mélange de pâte liquide et à former de la sorte une couche de pâte sur le fruit,
à immerger le fruit enrobé de pâte dans de l'huile chauffée,
à laisser le fruit enrobé de pâte immergé dans l'huile chauffée pendant une période suffisante pour que ladite couche de pâte soit frite, et
à retirer le fruit enrobé de pâte de l'huile dans une direction générale verticale,
caractérisé en ce que :
le mélange de pâte liquide comprend de la farine de soja, de la farine autre que celle de soja, des oeufs, du sucre et de l'huile,
ladite huile chauffée est chauffée à une température comprise entre 170 et 195°C, et
le fruit enrobé de pâte est introduit de manière générale verticalement dans une zone centrale de l'huile chauffée en tenant manuellement la tige de soutien, ladite tige de soutien et le fruit enrobé de pâte sont déplacés latéralement tandis qu'ils sont immergés dans l'huile chauffée en sorte de s'engager sur une pince montée sur un châssis suspendu sur la périphérie de l'huile chauffée, à distance de la zone centrale, de manière à suspendre le fruit au châssis à la périphérie de l'huile chauffée, en sorte de former sur ledit fruit une couche de pâte externe brun doré uniforme et régulière.

2. Procédé selon la revendication 1, dans lequel le mélange de pâte comprend de la poudre à lever.

3. Procédé selon la revendication 1 ou 2, dans lequel le mélange de pâte comprend un émulsionnant.

4. Procédé selon l'une quelconque des revendications 1 à 3, dans lequel le mélange de pâte comprend un stabilisant.

5. Procédé selon l'une quelconque des revendications 1 à 4, dans lequel le mélange de pâte comprend de la simple farine de froment.

6. Procédé selon l'une quelconque des revendications précédentes, dans lequel le mélange de pâte est préparé en ajoutant un liquide à un mélange de pâte sec.

7. Procédé selon la revendication 6, dans lequel le mélange de pâte sec comprend du lait en poudre.

8. Procédé selon la revendication 6 ou 7, dans lequel le mélange de pâte sec comprend des oeufs en poudre.

9. Procédé selon l'une quelconque des revendications précédentes, dans lequel le fruit est une banane, une pomme, une fraise, une pêche, une poire, un ananas ou un kiwi.

10. Appareil susceptible d'être utilisé pour préparer un produit alimentaire, comprenant un bac (4) à partie supérieure ouverte pour contenir l'huile de cuisson, des moyens pour chauffer l'huile contenue dans le bas, et un châssis (3) qui peut être monté dans ou sur la partie supérieure ouverte du bac (4) et qui s'étend en continu sur la périphérie du bac, le châssis (3) comprenant une série de dispositifs de fixation qui permettent de suspendre les produits alimentaires dans l'huile pour les y faire frire, les dispositifs de fixation (7) étant montés sur le châssis (3) sur la périphérie du bac,
caractérisé en ce que les dispositifs de fixation (7) sont dirigés vers l'intérieur vers la zone centrale du châssis et chacun d'entre eux comprend une paire de doigts élastiques (8, 9) faisant saillie latéralement et qui définissent une ouverture dirigée latéralement pour recevoir le produit alimentaire.
